Europäisches Patentamt

European Patent Office

Office européen des brevets

(11) Publication number: **0 484 609 A1**

## EUROPEAN PATENT APPLICATION

(21) Application number: **90830505.5**

(22) Date of filing: **07.11.90**

(51) Int. Cl.5: **B41F 17/00**, B41F 15/24,
B41F 15/28, B41F 15/12,
B65G 23/36, B65G 21/22

(43) Date of publication of application:
**13.05.92 Bulletin 92/20**

(84) Designated Contracting States:
**AT CH DE ES FR IT LI NL**

(71) Applicant: **OFFICINE MECCANICHE VIERO
S.R.L.
Via Archimede, 454
I-21042 Caronno Pertusella (VA)(IT)**

(72) Inventor: **Viero, Luigi c/o Officine Mecc.Viero
s.r.l.
454, Via Archimede
I-21042 Caronno Pertusella (VA)(IT)**

(74) Representative: **Ferraiolo, Ruggero et al
FERRAIOLO S.r.l., Via Napo Torriani, 10
I-20124 Milano(IT)**

(54) **A machine for printing fabrics.**

(57) A machine for printing fabrics comprising: a
short table (1) associated with at least one printing
station (S1, S2); a mobile closed carpet (4) driven by
a driving roller (3) and guided by guide means (11,
12) to follow a first straight path on said table (1), a
second winding path (A-B-C) downstream said table
and a third path, said winding path entailing a hori-
zontal length relatively small with respect to its lon-
gitudinal development.

Fig.2

Rank Xerox (UK) Business Services
(-/2.18/2.0)

This present invention relates to a machine for printing fabrics, in particular for printing fabrics on a table.

Machines for printing fabrics on a table are known wherein a fabric roll to be printed is laid on a table and a truck, bearing printing means and generally being actuated by a control equipment, moves along the fabric roll. To meet the conventional lengths of fabric rolls, the extension of said table may reach and exceed 80 meters and, therefore, it will be realized that the main disadvantage of such machines is the one of engaging a lot of space.

In order to obviate said disadvantage at least partly, machines have been proposed which have one or more fix printing stations and a carpet mobile along a closed circuit, so that a fabric roll, for instance 80 meters long, may be stuck to the closed carpet of 80 meters overhall extension, but mobile round a table approximately 40 meters long, which, anyway, is still an undesirable extension.

A machine is also known wherein a fabric roll is wound up round a roller; said fabric roll is laid on a short table in an intermittent way, step by step; on said table one or more printing stations are operative; as said fabric roll is printed, it moves to a drying tunnel. Such a machine does not require a long table, but the drying tunnel still takes much space.

This present invention, as claimed, obviates the disadvanteges of known machines and solves the problem of printing long fabric rolls without engaging much space.

The invented machine comprises a short table associated with at least one overhanging printing station and comprises a mobile closed carpet (a carpet mobile along a closed circuit) which is moved by a driving roller and controlled by guide means to follow a first straight path on said table, a second winding path downstream said table and a third straight path, the total extension of said paths being equal to the conventional length of a fabric roll to be printed and said winding path entailing a horizontal extension relatively small with respect to its longitudinal development.

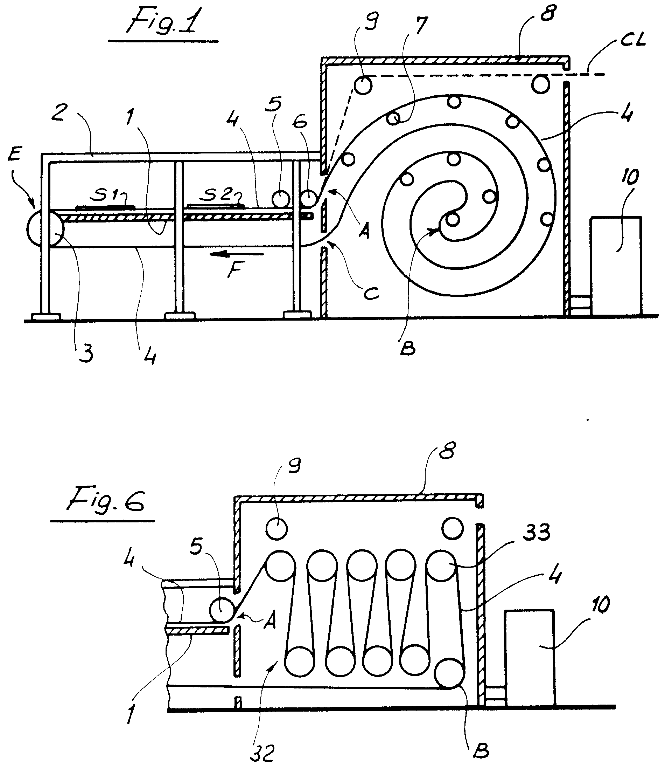

The main advantage of the invented machine resides in that much reduced space in horizontal direction is engaged with respect to the known machines; said winding path generates a kind of concentration zone wherein a big horizontal development of fabric roll takes a much reduced horizontal extention. The winding path may be of different shapes, for instance it may be as a double spiral (as shown in Figure 1) or as a plurality of close loops (as shown in Figure 6) so as to develop more in vertical than in horizontal direction. The latter execution may be used in case very long fabric rolls are treated.

One way of carrying out the invention is described in detail herebelow with reference to the accompanying drawings which illustrate specific embodiments and wherein :

FIG. 1 is a side view,
FIG. 2 is a part plan view,
FIG. 3 is a front view,
FIG. 4 is a part transversal section view,
FIG. 5 is a part plan view and
FIG. 6 is a part side view.

Fig. 1 shows: a straight table 1 which is fixed to the machine frame 2 and is long enough to have two overhanging printing stations S1, S2. At the initial end of table 1 there is a driving roller 3; a mobile carpet of plastic material 4 is closed round said driving roller 3 rotating for moving the mobile carpet 4 according to arrow F and a conventional pre-arranged printing program. In a first straight going path, comprised within the driving roller 3 adjacent to the initial end E of table 1 and two couples of driving rolls, 5,5' - 6,6' adjacent to the final end of the table 1, the carpet runs along table 1; in a second winding going path the mobile carpet runs along a spiral portion A-B; in a third return path the mobile carpet first runs alone a spiral portion B-C and then along a straight portion under table 1. The carpet is supported by rolls 7 in the upper parts of spiral lengths. The machine comprises a case 8 housing the portion of guide means, articulated chain and mobile carpet which follow the two winding paths. This case 8 comprises idle rolls 9 used in case a fabric roll has to be printed by only two colours in said printing stations S1, S2; then, the fabric roll CL may be detached from the carpet immediately after leaving the table in order to be expelled from the case through an upper opening. A hot air source 10 may supply the case 8 with hot air to dry the just printed fabric roll.

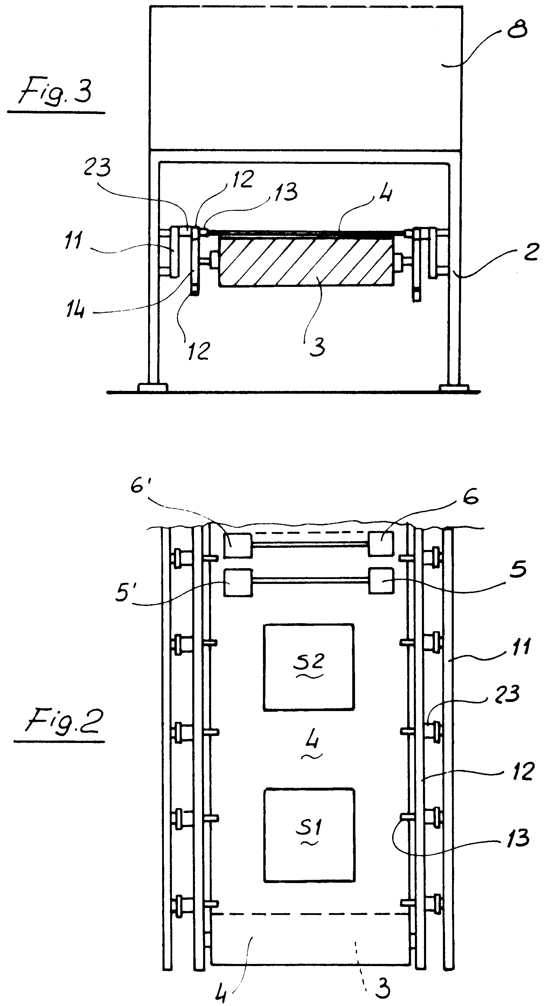

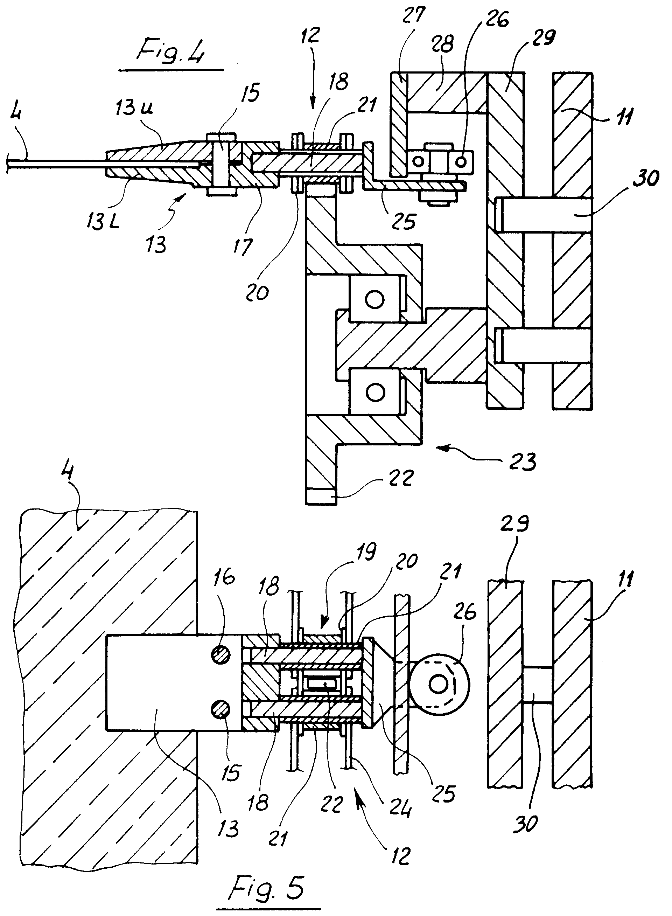

FIGG. 2, 3 show that parallel to said paths a guide 11 for a articulated closed chain 12 is provided at each side of the mobile carpet 4; conveniently spaced clamps 13 are connected with said chain 12 to keep the carpet edges. Said clamps 13 are connected with parts 19 (shown in Fig. 5) in the articulated closed chain 12 which rotates on idle gear wheels 23 spaced all along the path. Depending on the printing program, the mobile carpet 4 will cover one only or more turns along the path E-A-B-C-E. The two articulated closed chains 12 are driven by two gears 14, respectively secured to the two ends of the driving roller 3. An electric motor, not shown in the drawings, is associated with one of said gears 14 to move at the same peripheral velocity the driving roller 3 and the articulated closed chains 12. Said rolls 5,5' - 6 6' press the two carpet side bands not covered by the fabric roll and are moved by a motor, not shown, at a peripheral velocity a little higher than that of the driving roller 3, so as to tension longitudinally the mobile carpet 4 and the fabric roll stuck thereto (not shown in the drawings). In such a way the printing is correctly made on the well tensioned fabric.

With reference to FIGG. 4, 5, it is intended to keep under transversal tensioning the mobile carpet 4 and a fabric roll stuck thereto, still for achieving a correct fabric printing. To this purpose, the clamps 13, at least at one side of the mobile carpet 4, are elastically connected with said articulated closed chain 12. To do that, it is provided at least one guide 29 for an articulated closed chain 12 adjustable and transversally fastened to an auxiliary guide 11 fixed to the machine frame 2. In a first embodiment, said clamps 13, at least on one side of the mobile carpet 4, are connected in an adjustable manner, for instance by means of adjusting screws which adjust the span between one of the guides and the respective auxiliary fixed guide, taking into account the cooperation of certain transversal elasticity of mobile carpet 4. In a second embodiment, those elements in the articulated closed chains 12 to which said clamps 13 are connected are provided with means for cooperating with guides fastened to the fixed auxiliary guide, as, for instance, ball bearings rolling on vertical guides in order to maintain the correct direction of said elements in said chain that, otherwise, would lean or come out from their guide under transversal tension.

Thus, FIGG. 4 and 5 show that clamps 13 are composed by two parts, lower 13L and upper 13U, joined by threaded pins 15, 16 so that, after introducing the side edge of mobile carpet 4 between said parts, said mobile carpet is fastened to clamps 13. These clamps, in turn, are screwed with their rear part 17 into the threaded part of pins 18 in the element 19 of the articulated closed chain 12; said pins are connected with the inner lateral plates 20 and are surrounded by cylinders 21 cooperating with teeth 22 of idle gear wheels 23 and with the teeth of the driving gear 14 fixed to the driving roller 3. Each of said pins 18 is in turn connected with the adjacent simple elements 24 which have not clamps 13 and relevant parts in the articulated closed chain 12. The outer ends of said pins 18 are fixed to the L shaped plate 25 to which a ball bearing 26 is hinged for rolling on the vertical longitudinal plate 27 fixed to the adjustable guide 29 by means of the element 28, during movement of said articulated closed chains 12. Said guides 29 are connected by adjustable screws 30 with the outer fixed guide 11 in such a way that, after connecting the mobile carpet with all clamps 13, it is possible to adjust the screws 30 in order to tension carpet 4 transversally thanks to its elasticity so that the fabric stuck thereto is tensioned transversally too, as required in the printing zones. The ball bearing 26 together with plate 27 prevent elements 19 tensioned towards mobile carpet in the articulated closed chain from leaning with respect to idle gears 23 and driving gear 14 or from decoupling from said gears.

To impart higher elasticity to the transversal tensioning action applied to the carpet, elastic means may be placed within the elements which connect the mobile carpet with the fixed guides, alternatively between the adjustable guides and the fixed guides. For instances, the connection between guide 29 and auxiliary fixed guide 11 may be executed by replacing the adjusting screws 30 with suitable springs (not shown in the drawings).

FIG. 6 shows an alternative wherein the winding path A-B followed by carpet 4, guide 11 and articulated closed chain 12 (only carpet 4 is shown) comprises a plurality of loops 32 vertically developed inside case 8. Idle gears 33 cooperate in guiding the chain 12 all along said winding path. In this alternative also, case 8 houses idle rolls 9 for the same purpose as explained with reference to Fig. 1.

## Claims

1. A machine for printing a fabric roll on a table comprising a table (1); a mobile closed carpet (4) whereto a fabric roll may be stuck; driving means (3) and guide means (11, 12) for running said mobile carpet (4) along a closed circuit (E-A-B-C-E) comprising said table (1); at least a printing station (S1, S2) overhanging said mobile carpet (4) in correspondence with said table (1), characterized in that said mobile carpet (4) and guide means (11, 12) are extended downstream said table (1) along a winding path (A-B-C; A-B) which entails a horizontal extension small with respect to its own longitudinal development, the overhall development of said closed circuit being at least equal to the conventional extension of a fabric roll to be printed.

2. A machine according to claim 1 characterized in that said winding path (A-B-C) comprises a going spiral path (A-B) and a ruturn spiral path (B-C).

3. A machine according to claim 1 characterized in that said winding path (A-B) is formed by a plurality of loops (32).

4. A machine according to claim 1 characterized in that said driving means (3) is located adjacent to the initial end of table (1) and at least a couple of driving-rolls (5, 5' -6, 6') is located adjacent to the final end of said table (1), presses said mobile carpet (4) and has a rotation peripheral velocity higher than the rotation peripheral velocity of said driving means (3) in order to tension the mobile carpet (4) longitudinally on said table (1).

5. A machine according to claim 1 characterized in that the connection of said mobile carpet (4) with at least one of said two articulated closed chains (12) comprises adjusting means (29, 30, 11) to impart to said mobile carpet (4) a controlled transversal tension.

6. A machine according to claim 3 characterized in that said adjusting means (29, 30, 11) comprises fixed to the machine frame (2) an auxiliary guide (11) joined by adjustable means (30 with an adjustable guide (29) for said articulated closed chain (12).

7. A machine according to claim 1 characterized in that at least one of said adjustable guides (29) for the articulated closed chains (12) is joined by means of elastic adjustable means with a corresponding auxiliary guide (11) fixed to the machine frame (2).

8. A machine according to any of the preceeding claims characterized in that the part of said guide means (11, 12) and said mobile carpet (4) that follows said winding path (A-B-C; A-B) is housed in a case (8) which may receive hot air from a source of hot air (10) for drying a fabric roll just printed on said table (1).

9. A machine according to claim 8 characterized in that said case (8) is provided with sliding means (9) and an opening for letting go out a fabric roll (CL) just printed and detached from said mobile carpet (4).

_Fig.1_

_Fig. 6_

_Fig. 3_

_Fig. 2_

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 080 133 (JENKINS)<br>* The whole document *<br>--- | 1,3 | B 41 F 17/00<br>B 41 F 15/24<br>B 41 F 15/28<br>B 41 F 15/12<br>B 65 G 23/36<br>B 65 G 21/22 |
| X | DE-A-1 152 380 (GILLET & FILS)<br>* The whole document * | 1,3 | |
| A | ---<br> | 8,9 | |
| A | DE-A- 860 043 (WURM)<br>* The whole document *<br>--- | 1 | |
| A | FR-A-2 365 439 (MITTER)<br>* Page 4, lines 16-20; figure 1 *<br>--- | 1,4 | |
| A | US-A-4 133 667 (NITSCHKE)<br>* Claim 1; figures 1,2 *<br>----- | 4 | |

TECHNICAL FIELDS
SEARCHED (Int. Cl.5)

B 41 F
B 65 G

The present search report has been drawn up for all claims

| Place of search | Date of completion of the search | Examiner |
|---|---|---|
| THE HAGUE | 07-11-1991 | MADSEN P.A. |

European Patent
Office

EP   90 83 0505

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions,
namely:

See sheet  -B-

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims:

**European Patent Office**

## LACK OF UNITY OF INVENTION

The Search Division considers that the present European patent application does not comply with the requirement of unity of invention and relates to several inventions or groups of inventions,

namely:

1. Claims 1,2,3,8,9: A machine for printing a fabric roll comprising a mobile closed carpet.

2. Claims 4,5,6,7: A machine for pringing a fabric roll comprising a mobile closed carpet and means for tensioning the carpet.